# EUROPEAN PATENT APPLICATION

(11) **EP 2 626 844 A1**
(43) Date of publication of application: **14.08.2013**
(21) Application number: 13153773.0
(22) Date of filing: 01.02.2013
(51) Int. Cl.: G08B 13/196, H04N 7/18, G06T 15/20

(54) **System and method of optimal video camera placement and configuration**

(30) Priority: 08.02.2012 US 201213368679
(71) Applicant: Honeywell International Inc., Morristown, NJ 07962-2245 (US)
(72) Inventor: Venkatesh, Vinay, Morristown NJ 07962-2245 (US)
(74) Representative: Houghton, Mark Phillip

(57) **Abstract**

Systems and methods are provided optimally placing and configuring video surveillance cameras in a video management system. Methods include providing a diagram of a facility to be monitored, control circuitry identifying a plurality of areas on the diagram of the facility, control circuitry determining a three-dimensional volume for each of the plurality of identified areas, control circuitry determining a placement for each of a plurality of data collection devices in respective ones of the plurality of identified areas, and control circuitry determining a configuration for each of the plurality of data collection devices.

## Description

### FIELD

The present invention relates generally to video management systems. More particularly, the present invention relates to systems and methods for optimally placing and configuring video surveillance cameras in a video management system.

### BACKGROUND

Video management systems can include a plurality of devices including, for example, surveillance cameras, video recorders (DVR, NVR, etc), work stations, and viewers. In some video management systems, devices can be connected via, for example, closed circuit television (CCTV).

Surveillance cameras or other data collection devices that are part of video management systems can be placed throughout a monitored area. However, in known video management systems, the placement and any configuration of the data collection devices are manual.

For example, given a list of critical zones within a monitored facility, a user can decide the location of data collection devices within the monitored facility and the configuration parameters for those data collection devices, for example, the pan-tilt-zoom (PTZ) settings of the devices. When the monitored facility is large, the process of placing and configuring data collection devices can be time consuming, tedious, and prone to errors. For example, the placement and configuration of data collection devices connected via, for example, CCTV, can undergo multiple testing cycles before commissioning.

There is thus a continuing, ongoing need for improved systems and methods for optimally placing and configuring video surveillance cameras in a video management system.

### BRIEF DESCRIPTION OF THE DRAWINGS

FIG. 1 is a flow diagram of a method of placing and configuring video surveillance cameras in accordance with embodiments disclosed herein; and

FIG. 2 is a block diagram of a system for carrying out the method of FIG. 1 and others disclosed herein.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein include systems and methods for optimally placing and configuring video surveillance cameras in a video management system. Preferably, such systems and methods can employ a CAD (computer aided design) and/or BIM (building information modeling) diagram of a monitored area.

For example, architects, owners, and/or managers of a large building or facility to be monitored will preferably have a CAD and/or BIM diagram of the facility. BIM is an emerging standard for creating building models that can provide information about a building in more detail than is provided by known CAD diagrams. Thus, in some systems and methods disclosed herein, BIM diagrams of a monitored facility are employed.

During the conceptualization and design stages of a facility, the BIM data created by a facility's architect can be used to plan a surveillance setup. When the BIM data is available, the total time for determining the placement and configuration of data collection devices and CCTV in the facility can be saved, for example, by eliminating the need for a trial and error process for placing surveillance cameras and by eliminating the time spent inputting configuration data. The total time saved can include the time included during proposal, conceptualization, design, configuration, and commission stages.

In accordance with disclosed systems and methods, areas in a monitored facility can be identified, and information about the identified areas can be extracted from a BIM model. For example, systems and methods can extract information that is specific to each identified area, including but not limited to information about the walls, doors, and windows in the area.

The adjacency information of each identified area can be calculated and stored in an adjacency database. It is to be understood that adjacency information can be calculated by determining common edges between identified areas, for example, walls in the BIM model. In some embodiments, the adjacency database can use a graph data structure to represent the adjacency information.

Systems and methods disclosed herein can determine area characteristics for each identified area. For example, systems and methods can use identified areas and the adjacency information for each identified area to calculate a two-dimensional polygon for each identified area. The two-dimensional polygon for each identified area can include the area of a floor space in the identified area.

The two-dimensional polygon for each identified area can be saved in a database and used, along with known or predetermined three-dimensional information about the identified area, to calculate a three-dimensional volume of the identified area. The three-dimensional volume of each identified area can also be saved in a database.

In accordance with some embodiments, systems and methods disclosed herein can employ a modified triangulation algorithm for each identified area to determine the placement of fixed data collection devices, that is, non-PTZ surveillance cameras, in the identified area. For example, known triangulation algorithms can split two-dimensional polygons into two-dimensional triangles. However, the modified triangulation algorithm disclosed herein can determine three-dimensional pyramid sections for each identified area. The apex point for each pyramid can be determined for placement of a fixed data collection device. In some embodiments, the zoom value of a fixed data collection device can be used to determine the height of a three-dimensional pyramid.

In embodiments for determining the placement of non-fixed data collection devices, that is, PTZ surveillance cameras, systems and methods can define a coverage pyramid set and a monitored pyramid. The coverage pyramid set can be defined using minimum and maximum pan, tilt, and zoom values for a PTZ surveillance camera. Further, the coverage pyramid set can define an overall coverage space for a PTZ camera.

The monitored pyramid can be defined as the space that a PTZ camera monitors at any given moment. Thus, in some embodiments, the monitored pyramid can be one pyramid from the coverage pyramid set.

For each identified area, CSG (constructive solid geometry) algorithms can be applied to cut out pyramid sections from the identified area. In embodiments with non-PTZ data collection devices, determining the placement of the device can ensure that a minimum number of cameras capture the maximum monitored space. That is, the coverage pyramid for a minimum number of cameras preferably covers a maximum portion of a monitored pyramid section.

In embodiments with PTZ surveillance cameras, only an initial configuration of the camera need be initially defined. However, the initial configuration should preferably ensure that a minimum number of cameras capture the maximum monitored space. That is, the initial configuration for minimum number of PTZ preferably covers a maximum portion of a monitored pyramid section.

In accordance with systems and methods disclosed herein, additional configuration parameters can be solicited from a user for PTZ surveillance cameras. For example, systems and methods may solicit information including, but not limited to, critical areas that must be monitored at all times, desired PTZ presets, and the like. The additional configuration parameters can be used to optimally derive coverage sets for the volume of each identified area.

After the placement of data collection devices in identified areas of a monitored facility is determined, systems and methods can determine a configuration for each of the devices. For example, systems and methods disclosed herein can generate BIM constructs that contain placement and configuration values for each data collection device. In some embodiments, each BIM construct can be added to a BIM file for a respective floor or building.

For fixed data collection devices, that is, non-PTZ surveillance cameras, the configuration values in the BIM constructs can include zoom values for the cameras. For non-fixed data collection devices, that is, PTZ surveillance cameras, the configuration values in the BIM constructs can include pan, tilt and zoom values for the cameras.

In embodiments in which data collection devices are part of a video management system, systems and methods can determine and store at least one of start and end times for pan, tilt, and/or zoom settings as well as redundancy settings as BIM data and/or in a separate file or database. For example, redundancy settings can include PTZ values for cameras that are configured to provide redundant coverage with another camera.

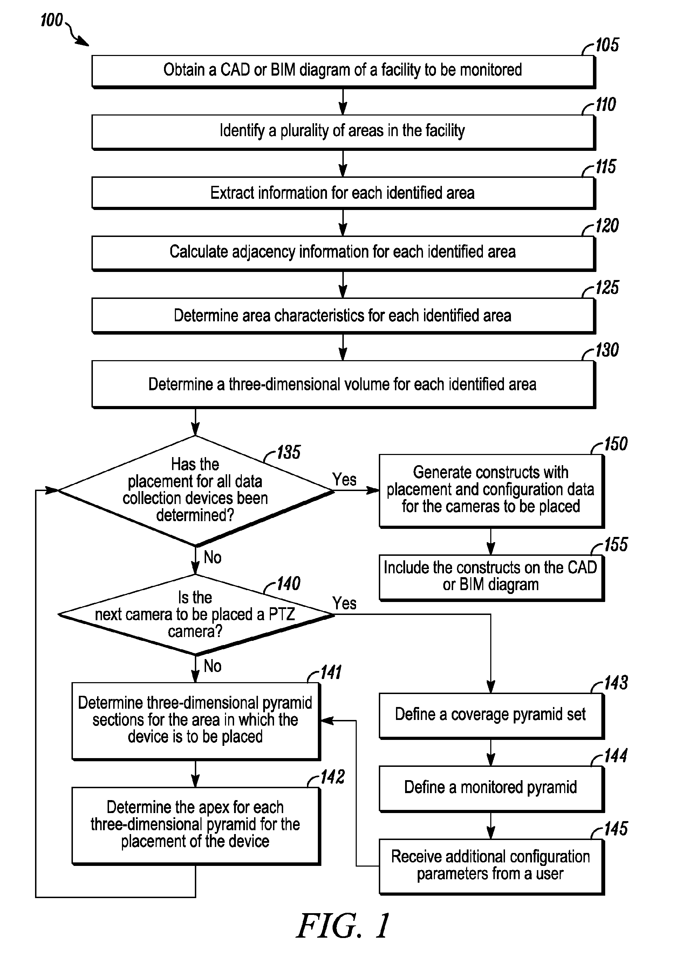

FIG. 1 is a flow diagram of a method 100 of placing and configuring video surveillance cameras in accordance with embodiments disclosed herein. As seen in FIG. 1, the method 100 can include obtaining a CAD or BIM diagram of a facility to be monitored as in 105. Then, a plurality of areas in the facility can be identified as 110.

The method 100 can extract information for each identified area as 115 and calculate adjacency information for each identified area as in 120. Then, the method 100 can determine area characteristics for each identified area as in 125, and determine a three-dimensional volume of each identified area as in 130.

After the method 100 has determined a three-dimensional volume of each identified area in the facility as in 130, the method 100 can determine if the placement for all data collection devices to be placed has been determined as in 135. If yes, then the method 100 can proceed to generate constructs with placement and configuration data for the cameras to be placed as in 150.

However, if the method 100 determines that the placement for all data collection devices to be placed has not been determined as in 135, then the method can determine if the next data collection device to be placed is a PTZ camera as in 140.

If not, then the method 100 can determine three-dimensional pyramid sections for the area in which the device is to be placed as in 141 and can determine the apex for each three-dimensional pyramid as the placement for the device as in 142.

However, if the method 100 determines that the next data collection device to be placed is a PTZ camera as in 140, then the method can define a coverage pyramid set as 143, define a monitored pyramid as in 144, receive additional configuration parameters from a user as in 145, determine three-dimensional pyramid sections for the area in which the device is to be placed as in 141, and determine the apex for each three-dimensional pyramid as the placement for the device as in 142.

After the method 100 has determined the placement for the device as in 142, the method 100 can again determine if the placement for all data collection devices has been determined as in 135. As explained above, when the method 100 determines that the placement for all data collection devices has been determined as in 135, the method 100 can generate constructs with placement and configuration data for the cameras to be placed as in 150. Finally, in 155, the method 100 can add the constructs to the diagram of the facility obtained as in 105.

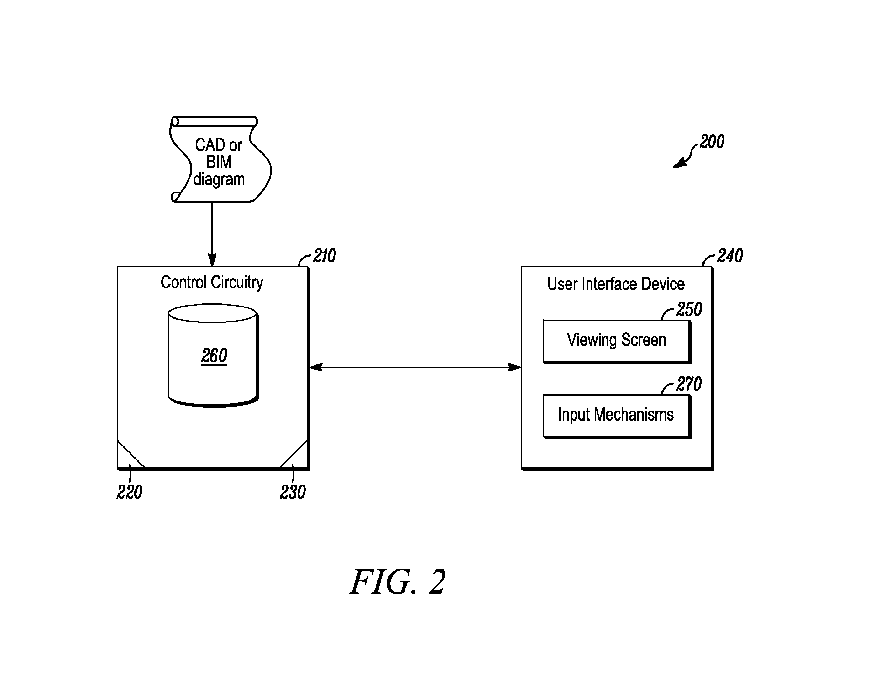

The method shown in FIG. 1 and others disclosed herein can be implemented with a system 200. As seen in FIG. 2, the system 200 can include control circuitry 210, one or more programmable processors 220, and executable control software 230 as would be understood by those of skill in the art. In some embodiments, the control circuitry 210 can include a memory device 260.

The executable control software 230 can implement the exemplary method shown and described in FIG. 1 as well as others described herein. Further, the executable control software 230 can be stored on a transitory or non-transitory local computer readable medium, including, but not limited to, local computer memory, RAM, optical storage media, magnetic storage media, flash memory, etc..

An associated user interface device 240 can be in communication with the control circuitry 210, and a viewing screen 250 of the user interface device 240, as would be known by those of skill in the art, can display interactive and viewing windows as well as CAD and/or BIM maps, diagrams, and tools. In some embodiments, the user interface device 240 can be a multi-dimensional graphical user interface and/or one or more input mechanisms 270, for example, a keypad or a mouse, that can receive user input.

A CAD or BIM diagram can be input into the control circuitry 210, and the executable control software 230 can determine the placement and configuration for a plurality of data collection devices to be included in a facility depicted by the CAD or BIM diagram.

In some embodiments, systems and methods disclosed herein can provide a BIM tool to visually represent data collection devices and their respective coverage areas on a BIM map, model, or diagram. For example, in facilities with pre-configured surveillance cameras, the BIM tool can be employed to visually highlight areas not covered by the existing setup. In some embodiments, coverage areas can be shown in green, and hotspot areas can be shown in red. After systems and methods disclosed herein are employed, the BIM tool can update a coverage map to show the state of any changed coverage.

When the disclosed systems and methods for placing and configuring video surveillance cameras are employed, improved video overlays and the like can be created for augmenting video data streams captured by data collection devices in the monitored facility. For example, the known position, configuration, and current orientation of data collection devices in a monitored facility can be used for improved monitoring of video data streams from the devices.

In some embodiments, a BIM tool can be integrated with a video management and/or access control system so that, during operation, a coverage map under specific conditions can be an overlay to a BIM map. Then, a user can click, tap, or otherwise select a data collection device or coverage area shown on the map view either live or pre-recorded video data streams from the selected device or of the selected coverage area.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

From the foregoing, it will be observed that numerous variations and modifications may be effected without departing from the spirit and scope of the invention. It is to be understood that no limitation with respect to the specific system or method illustrated herein is intended or should be inferred. It is, of course, intended to cover by the appended claims all such modifications as fall within the spirit and scope of the claims.

## Claims

1. A method comprising:
providing a diagram of a facility to be monitored;
control circuitry identifying a plurality of areas on the diagram of the facility;
control circuitry determining a three-dimensional volume for each of the plurality of identified areas;
control circuitry determining a placement for each of a plurality of data collection devices in respective ones of the plurality of identified areas; and
control circuitry determining a configuration for each of the plurality of data collection devices.

2. The method of claim 1 wherein the diagram of the facility to be monitored is one of a CAD diagram and a BIM diagram.

3. The method of claim 1 wherein the control circuitry identifying a plurality of areas on the diagram of the facility includes the control circuitry extracting information about respective ones of the identified areas from the diagram of the facility.

4. The method of claim 3 wherein the control circuitry extracting information about respective ones of the identified areas from the diagram of the facility includes the control circuitry extracting information about at least one of walls, doors, and windows from the diagram of the facility.

5. The method of claim 1 wherein the control circuitry identifying a plurality of areas on the diagram of the facility includes the control circuitry extracting adjacency information about respective ones of the identified areas from the diagram of the facility.

6. The method of claim 5 wherein the control circuitry extracting adjacency information includes the control circuitry determining common edges between respective ones of the identified areas on the diagram of the facility.

7. The method of claim 1 wherein determining a three-dimensional volume for each of the plurality of identified areas includes:
control circuitry determining a two-dimensional polygon for each of the plurality of identified areas;
control circuitry using the two-dimensional polygon for each of the plurality of identified areas and using predetermined three-dimensional information about each of the plurality of identified areas to determine the three-dimensional volume for each of the plurality of identified areas.

8. The method of claim 7 wherein the two-dimensional polygon for each of the plurality of identified areas includes an area of a floor space in each of the plurality of identified areas.

9. The method of claim 1 wherein the control circuitry determining a placement for each of the plurality of data collection devices includes:
for fixed data collection devices in the plurality of data collection devices, control circuitry determining three-dimensional pyramid sections in respective three-dimensional volumes in each identified area, and control circuitry determining an apex of each three-dimensional pyramid section as the placement for one of the plurality of data collection devices; and
for non-fixed data collection devices in the plurality of data collection devices, control circuitry determining a coverage pyramid set and an initial monitored pyramid in respective three-dimensional volumes in each identified area, control circuitry determining three-dimensional pyramid sections for the initial monitored pyramid, and control circuitry determining an apex of each three-dimensional pyramid section for the initial monitored pyramid as the placement for one of the plurality of data collection devices.

10. The method of claim 9 wherein the fixed data collection devices include surveillance cameras, and wherein the non-fixed data collection devices include PTZ surveillance cameras.

11. The method of claim 9 further comprising control circuitry determining a height of each three-dimensional pyramid section based on a zoom value of each fixed data collection device.

12. The method of claim 9 further comprising control circuitry determining the coverage pyramid set using minimum and maximum pan, tilt, and zoom values for a respective non-fixed data collection device.

13. The method of claim 1 wherein the control circuitry determining a configuration for each of the plurality of data collection devices includes control circuitry receiving desired configuration parameters for each of the plurality of data collection devices.

14. The method of claim 9 further comprising:
control circuitry receiving desired configuration parameters for each of the plurality of data collection devices; and
control circuitry using the received desired configuration parameters to determine the coverage pyramid set for the non-fixed data collection devices.

15. The method of claim 1 further comprising adding placement data and configuration data for each of the plurality of data collection devices to a file containing the diagram of the facility to be monitored.
